# EUROPÄISCHE PATENTSCHRIFT

(11) **EP 3 046 706 B1**
(45) Veröffentlichungstag und Bekanntmachung des Hinweises auf die Patenterteilung: **04.09.2019**
(21) Anmeldenummer: 14766971.7
(22) Anmeldetag: 15.09.2014
(51) Int. Cl.: B23B 47/00, B23Q 1/70, B23Q 1/26, B23Q 15/14, F16C 32/04

(54) **WERKZEUGSPINDEL MIT EINEM AKTIVEN MAGNETLAGER**
TOOL SPINDLE WITH AN ACTIVE MAGNETIC BEARING
BROCHE PORTE-OUTIL AVEC PALIER MAGNÉTIQUE ACTIF

(30) Priorität: 20.09.2013 DE 102013218888
(43) Veröffentlichungstag der Anmeldung: 27.07.2016
(73) Patentinhaber: Mahle International GmbH, 70376 Stuttgart (DE)
(72) Erfinder: SCHNAITMANN, Gottfried, 71522 Backnang (DE)
(74) Vertreter: BRP Renaud & Partner mbB Rechtsanwälte Patentanwälte Steuerberater
(86) Internationale Anmeldenummer: PCT/EP2014/069602
(87) Internationale Veröffentlichungsnummer: WO 2015/039985

(56) Entgegenhaltungen:
- DE-A1- 19 917 134
- DE-A1-102005 020 501
- DE-A1-102008 063 945
- DE-B3- 10 308 442
- HORSEMANN W: "PROZESSREGELUNG BEIM INNENRUNDSCHLEIFEN MIT AKTIV MAGNETGELAGERTEN SPINDELN", VDI Z, SPRINGER VDI VERLAG, DE, Bd. 132, Nr. 12, 1. Dezember 1990 (1990-12-01), Seiten 77-79, XP000176613, ISSN: 0042-1766

## Beschreibung

Die Erfindung betrifft eine Werkzeugspindel nach dem Oberbegriff des Anspruchs 1 sowie eine entsprechende Werkzeugmaschine mit einer derartigen Werkzeugspindel, die aus dem Dokument DE 103 08 442 B3 bekannt ist.

Maschinen zur Bearbeitung von Werkstücken mit Werkzeugen sind auf dem Fachgebiet des Maschinen- und Werkzeugbaus als sogenannte Werkzeugmaschinen bekannt. Gemäß einer engeren Auslegung wird dieser Begriff vorrangig im Kontext fügender, umformender und trennender, im letztgenannten Fall insbesondere zerteilender, spanender und abtragender Fertigungsverfahren im Sinne der Normen DIN 8580 ff. sowie DIN 69 651 Teil 1 verwendet. Diese restriktivere Begriffsbestimmung sei nunmehr auch den folgenden Ausführungen zugrunde gelegt.

Mit dem Ziel einer Formgebung des Werkstücks erzeugt eine gattungsgemäße Werkzeugmaschine eine Relativbewegung zwischen Werkzeug und Werkstück, welche sich funktional in eine Vorschub- oder Zustellkomponente sowie eine Hauptkomponente unterteilen lässt. Als wichtigste Baugruppe moderner Werkzeugmaschinen gilt dabei eine direktangetriebene, präzise gelagerte Welle mit zumeist integrierter Werkzeugschnittstelle, die dem Fachmann als Motorspindel geläufig sind.

Obgleich die besagte Relativbewegung zwischen Werkzeug und Werkstück grundsätzlich mittels einer Drehung jedwedes der beiden Elemente bewirkt werden mag, sind Bohr-, Schleif- und Fräsmaschinen nach dem Stand der Technik zumeist mit werkzeugtragenden Motorspindeln ausgerüstet, die im Folgenden als Werkzeugspindeln bezeichnet werden. DE 101 37 437 B4 beschreibt exemplarisch ein auf einer derartigen Bohrspindel basierendes Bearbeitungsverfahren für Bohrungen wie die Bolzenbohrung eines Kolbens oder die Pleuelbohrung eines Pleuels, in dessen Rahmen die Bolzenbohrung beziehungsweise die Pleuelbohrung mit einer Bohrspindel einer Bearbeitungseinrichtung bearbeitet wird und die Bohrspindel während der Bearbeitung zu der theoretischen Lochmitte der Bohrung versetzt angeordnet ist und der Kolben beziehungsweise das Pleuel während der Bearbeitung eine Linearbewegung in Vorschubrichtung ausführt.

Als problematisch erweisen sich dabei vor allem unrunde, beispielsweise sogenannte ballige Bohrungen. Eine zur Erzeugung derartiger Bohrungen vorgesehene Feinbohrmaschine offenbart etwa DE 44 42 218 A1. Gemäß diesem Vorschlag soll die Feinbohrmaschine mit einem Bohrmeißel an einer Bohrspindel und einem Halter für ein zu bearbeitendes Werkstück zur Erzeugung unrunder Bohrungen für einen wirtschaftlichen Einsatz mit hohen Drehzahlen ausgestaltet werden. Zu diesem Zweck schwingt der Halter für das Werkstück in mindestens einer Richtung translatorisch mit einer von der jeweiligen Drehzahl des Bohrmeißels bestimmten Frequenz und auf einer durch die zu erzeugende Bohrungsform bestimmten Auslenkungsbahn.

Auch DE 10 2008 063 945 A1 betrifft ein Verfahren zur Gestaltung von unrunden Bohrungsprofilen und konzentriert sich dabei auf Bolzenbohrungen von Kolben einer Brennkraftmaschine, die zur Aufnahme von Lagerbuchsen bestimmt sind. Die Bearbeitung erfolgt in diesem Verfahren mittels einer durch die Bolzenbohrungen geführten rotierenden und linear verschiebbaren, zwischen einer festen Zentrierspitze und einer beweglichen Zentrierspitze aufgenommenen Bohrstange und zugehörigem Schneidwerkzeug. Die bewegliche Zentrierspitze ist dabei einem Schwinghebel eines elektronischen Formbolokopfes zugeordnet, über den die Bohrstange während der Bearbeitung zur Schaffung von geometrisch unterschiedlich gestalteten Bohrungsprofilen der Bolzenbohrungen begrenzt schwenkbar und/oder oszillierend bewegbar ist.

DE 10 2005 020 501 A1 beschreibt ein ähnliches Verfahren zur Einbringung einer unrunden Bolzenbohrung in einen Kolben einer Brennkraftmaschine mittels einer sich drehenden und linear verschiebbaren Bohrstange. Nach diesem Ansatz ist vorgesehen, dass die Bohrstange zwischen einer festen und einer beweglichen Spitze gelagert ist und mittels eines Kipphebels die einzubringende unrunde Form abgetastet und auf die Bohrstange übertragen wird.

Gemäß dem in DE 103 08 442 B3 erläuterten Verfahren hingegen wird zur spanabhebenden Herstellung einer Formbohrung ein Werkzeug mittels einer magnetisch gelagerten, rotierend antreibbaren Spindel angetrieben. Das Werkzeug ist auf der der Spindel entgegengesetzten Seite des Werkstückes durch eine radialmagnetisch gelagerte Gegenspindel gelagert. Die radiale Lage, die axiale Lage und die Drehwinkelstellung der Spindel werden durch Radialsensoren, Axialsensoren und einen Drehwinkelgeber erfasst und über ein Regelsystem auf einen programmierbaren Soll-Wert geregelt. Das Werkstück und das Werkzeug sind in Axialrichtung gegeneinander verfahrbar.

Aus der DE 199 17 134 A1 ist wiederum eine Werkzeugspindel bekannt.

Schließlich ist noch WO 2011/005498 A2 zu würdigen, welche ein weiteres Verfahren zum Formen von Bolzenstiftlöchern sowie ein entsprechendes Bohrsystem vorschlägt. Verfahren und Vorrichtung umfassen in diesem Fall die Befestigung eines Kolbens an einer durch einen Schieber abgestützten Halterung. Dann dreht sich ein Schneidelement um eine erste Achse und der Schieber mitsamt der Halterung bewegt sich in Richtung des Schneidelements entlang der ersten Achse und bringt den Kolben in Schneidkontakt mit dem Schneidelement. Ferner bewegt sich die Halterung entlang zweiter und dritter Achsen, die sich jeweils quer zu der ersten Achse erstrecken, und das Schneidelement arbeitet die gewünschten Stiftloch-Konturen in den Kolben ein.

Ein Nachteil dieser bekannten Ansätze liegt indes in der möglichen Schwingung des von der Werkzeugspindel getragenen Bohrwerkzeugs, welche vor allem bei der Bearbeitung kleiner und tiefer Bohrungen droht. Insofern erschwert die nach dem Stand der Technik vorgenommene Auslenkung der Werkzeugspindel den Einsatz einer das Werkzeug stützenden Pinole, welche im Falle runder Bohrungen problemlos zur zusätzlichen Lagerung genutzt werden kann. Der Erfindung liegt daher die Aufgabe zugrunde, eine Werkzeugspindel bereitzustellen, die ein übermäßiges Schwingen des Bohrwerkzeugs im Betrieb verhindert. Die Erfindung stellt sich darüber hinaus der Aufgabe, eine entsprechende Werkzeugmaschine zu schaffen.

Diese Aufgaben werden durch eine Werkzeugspindel mit den Merkmalen des Anspruchs 1 und eine Werkzeugmaschine mit den Merkmalen des Anspruchs 9 gelöst.

Die Erfindung fußt demnach auf dem Grundgedanken, die besagte Auslenkung dahingehend zu modifizieren, dass die Antriebswelle mitsamt dem im Spannfutter aufgenommenen Bohrwerkzeug um einen zentral am abgewandten Ende des Bohrwerkzeugs in dessen Zentriersenkung gelegenen Fixpunktes geschwenkt werden kann. Auf diesem Wege bleibt die Werkzeugspitze selbst beim Schwenken der Antriebswelle stets in ihrer ursprünglichen Raumposition, obgleich sich die Ausrichtung der Drehachse merklich gegenüber der Ausgangsstellung verändern kann.

Der somit in der endseitigen Zentriersenkung gebildete Fixpunkt des Bohrwerkzeugs erlaubt es nunmehr einer in diese Zentriersenkung eingreifenden und in Richtung der Werkzeugspindel ausgerichteten Pinole, das Bohrwerkzeug gegen die Werkzeugspindel abzustützen und auf diese Weise wesentlich zu stabilisieren. Die stabilisierende Wirkung kann auch im Betrieb der Werkzeugspindel aufrechterhalten werden, wenn diese in der beschriebenen Weise geschwenkt wird, da der als Ansatzpunkt der Pinole dienende Fixpunkt auch in diesem Anwendungsfall seine Lage nicht wesentlich verändert und ein unerwünschtes Abrutschen der Pinole aus der Zentriersenkung in aller Regel vermieden werden kann. Auch die unrunde oder ballige Formgebung kleiner und tiefer Bohrungen wird daher mittels einer erfindungsgemäßen Werkzeugspindel ermöglicht, während das Eingreifen der Pinole gleichzeitig ein übermäßiges Schwingen des Werkzeugs zu verhindern vermag.

Eine besondere Herausforderung stellt in dieser Anordnung die axiale Lagerung der Antriebswelle dar. Insofern erfordert der erheblich vom Spannschaft entfernte Fixpunkt eine deutliche Winkeländerung seitens der Antriebswelle, um im Bereich der zwischen den entsprechenden Endpunkten angeordneten Schneiden des Bohrwerkzeugs die gewünschte Auslenkung zu erreichen. Ein herkömmliches Axiallager stößt angesichts dieser Dynamik unter Umständen an seine geometrischen Grenzen und wirkt der angestrebten Schwenkbewegung erheblich entgegen.

Die Erfindung erkennt vor diesem Hintergrund die wesentliche Bedeutung der Form der Axiallagerung und insbesondere der Gegenoberfläche des Axiallagers seitens der Antriebswelle. Dabei wird die besagte Gegenoberfläche daher durch einen das Axiallager radial umlaufenden Ring gebildet, für dessen geometrische Merkmale sich eine Reihe von Gestaltungsvarianten anbieten.

Erfindungsgemäß ist dabei der Ring nicht eben, sondern in Richtung des Fixpunkts gebogen. Um eine gegebene - senkrecht zu der gemeinsamen Drehachse von Antriebswelle und Bohrwerkzeug den Fixpunkt durchlaufende - Schwenkachse zu realisieren, bietet es sich in diesem Fall an, die zur Axiallagerung dienende Oberfläche des Rings so zu formen, dass sie die entsprechende Schwenkebene in einem gedachten Kreisbogen um den Fixpunkt schneidet.

Sofern indes mehrere Freiheitsgrade der Schwenkbewegung angestrebt werden, empfiehlt sich die Gestaltung der Ringoberfläche in Form einer Kugelkalotte, deren Mittelpunkt abermals vom charakteristischen Fixpunkt der Anordnung gebildet wird.

Vielfältige Vorzüge bietet dabei eine oszillierende Schwenkbewegung des in der Werkzeugspindel verspannten Bohrwerkzeugs mit einer Auslenkung von etwa 100 µm, welche sich zur Bearbeitung von Kolben, Naben, Pleueln oder Nocken in besonderem Maße eignet. Ein solches Schwingungsverhalten lässt sich beispielsweise im Wege einer konventionellen Steuerung herbeiführen, die hierzu elektrisch mit dem als aktivem Magnetlager ausgeführten Radiallager verbunden ist.

Eine Ausführung als Magnetlager birgt auch im Fall des Axiallagers beträchtliche Vorteile. Zu denken ist an die Vorzüge eines abrieb- und somit staubfreien Drehbetriebs ebenso wie an die verringerte Abnutzung des Axiallagers mit der Folge eines verringerten Wartungsaufwands. Auch eine Schmierung des Axiallagers kann bei diesem Ansatz entfallen, was wiederum die Verdampfung oder chemische Reaktion etwaiger Schmiermittel ausschließt. Die geringen Reibungsverluste gestatten darüber hinaus die Erschließung besonders hoher Drehzahlbereiche seitens der Antriebswelle. Die positiven Folgen der mechanischen Trennung zwischen Axiallager und Ring werden durch jene einer thermischen und elektrischen Isolation ergänzt. In der Ausführung als aktives Magnetlager schließlich eröffnet das Axiallager die Möglichkeit einer gezielten Dämpfung unerwünschter Schwingungen und Unwucht sowie eine variable Steifigkeit im Betrieb der Werkzeugspindel.

Alternativ bietet sich eine beispielsweise hydro- oder aerostatische Lagerung der Antriebswelle in deren axialer Richtung an, welche sich gegenüber der magnetischen Ausführungsform durch verminderte konstruktive Komplexität sowie geringeren Platz- und Hilfsenergiebedarf bei einer potenziell erhöhten Kraftdichte auszeichnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: den Längsschnitt einer nicht erfindungsgemäßen Werkzeugspindel,
- Fig. 2: den Längsschnitt einer Werkzeugspindel gemäß einer ersten Ausführungsform,
- Fig. 3: den Längsschnitt einer Werkzeugspindel gemäß einer zweiten Ausführungsform sowie
- Fig. 4: den Längsschnitt einer Werkzeugspindel gemäß einer dritten Ausführungsform der Erfindung.

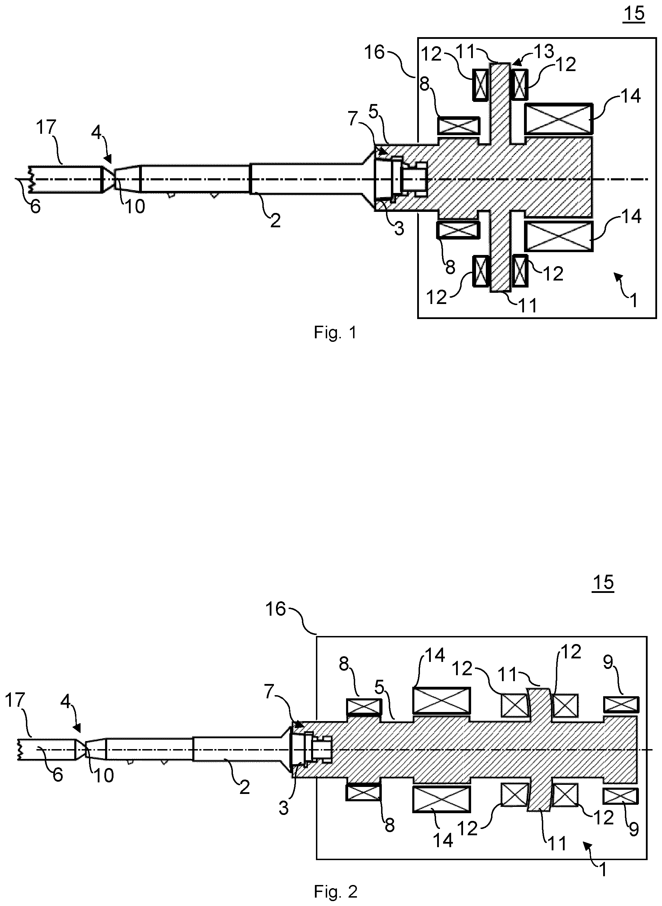

Figur 1 illustriert den grundlegenden Aufbau einer vergleichsweise einfachen, mit einem Bohrwerkzeug 2 bestückten Werkzeugmaschine 15. Als Bohrwerkzeug, Bohrer oder Bohreinsatz ist in diesem Zusammenhang grundsätzlich jedwedes Werkzeug zu verstehen, welches sich zur Erzeugung von Bohrungen in einem Werkstück im Wege des Zerspanens eignet. Bei dem vorliegenden Bohrwerkzeug 2 der Figur 1 handelt es sich um eine Bohrstange, die mit verschiedenen Schneidwerkzeugen bestückt werden kann. Als Werkstoff des Bohrwerkzeugs 2 kommt dabei ein geeignetes Hartmetall in Betracht.

Das längliche Bohrwerkzeug 2 der Figur 1 lässt endseitig eine zum Zentrieren des Bohrwerkzeugs 2 vorgesehene Zentriersenkung 4 erahnen, wobei dieser Begriff im gegebenen Kontext unterschiedlichste beispielsweise kegel- oder zylinderförmige Bohrungen oder anderweitige Vertiefungen des Bohrwerkzeugs 2 umfassen möge, die zu dessen Abstützung geometrisch das Eingreifen einer komplementär geformten Pinole 17, eines Reitstocks oder einer sonstigen Zentrierspitze erlauben.

In seinem der Zentriersenkung 4 in Längsrichtung des Bohrwerkzeugs 2 gegenüber liegenden Endbereich weist dieses einen morsekegel-, zylinder- oder sechskantförmigen Spannschaft 3 auf, mittels welchem das Bohrwerkzeug 2 in einer erfindungsgemäßen, das Bohrwerkzeug 2 tragenden Werkzeugspindel 1 der Werkzeugmaschine 15 verspannt ist. Die Werkzeugmaschine 15 umfasst neben der vorgenannten Pinole 17 und der dieser gegenüber angeordneten Werkzeugspindel 1 ein letztere aufnehmendes Spindelgehäuse 16 annähernd rechteckigen Grundrisses, aus deren zentraler Öffnung die Werkzeugspindel 1 auf einer der Pinole 17 zugewandten Seite herausragt. In diesem Bereich weist die Werkzeugspindel 1 ein dem Spannschaft 3 des Bohrwerkzeugs 2 als Aufnahme dienendes Spannfutter 7 als Teil einer Schnellspannvorrichtung auf. Eine derartige Klemmvorrichtung, die sich schnell und typischerweise ohne spezielles Werkzeug von Hand lösen oder festsetzen lässt, ist dem Fachmann beispielsweise auch als HSK-Schnellspanner bekannt.

In Verlängerung der vorgesehenen Drehachse 6 des Bohrwerkzeugs 2, welche im Wesentlichen bereits durch die Ausrichtung des Spannfutters 7 definiert ist, wird das Hauptvolumen des Spindelgehäuses 16 von einer das Spannfutter 7 tragenden Antriebswelle 5 durchzogen, die ihrerseits mechanisch mit dem Rotor oder Stator eines ebenfalls im Spindelgehäuse 16 aufgenommenen Elektromotors 14 verbunden und um die Drehachse 6 drehbar gelagert ist. Die Lagerung in radialer Richtung erfolgt dabei mittels eines als aktives Magnetlager ausgeführten, die Antriebswelle 5 in dieser Richtung innerhalb des Spindelgehäuses 16 beidseitig umschließenden Radiallagers 8. Diese erzeugt mithilfe geregelter Elektromagneten eine radial auf die Antriebswelle 5 wirkende Lagerkraft, wobei eine elektrisch mit dem Radiallager 8 verbundene, in den Abbildungen nicht gezeigte elektronische Steuerung die Stabilität der Antriebswelle 5 im Wege der Rückkopplung sicherstellt.

Zur Lagerung in axialer Richtung indes dient ein die Antriebswelle 5 zwischen dem Radiallager 8 und dem gegenüber dem Spannfutter 7 endseitig an der Antriebswelle 5 angeordneten Elektromotor 14 radial umlaufender, integral mit der Antriebswelle 5 ausgebildeter massiver Ring 11. Dieser Ring 11, welcher in der ersten Ausführungsform der Werkzeugmaschine 15 gemäß Figur 1 im Wesentlichen die Gestalt eines ebenen Hohlzylinders mit einem gegenüber der Antriebswelle 5 annähernd doppelt so großen Außendurchmesser besitzt, wird beiderseits seines äußeren Randbereichs von einem zum Radiallager 8 senkrechten Axiallager 12 geführt, wobei die Fertigungstoleranz von Ring 11 und Axiallager 12 ein definiertes Lagerspiel 13 zwischen deren zusammenwirkenden Gegenoberflächen zulässt.

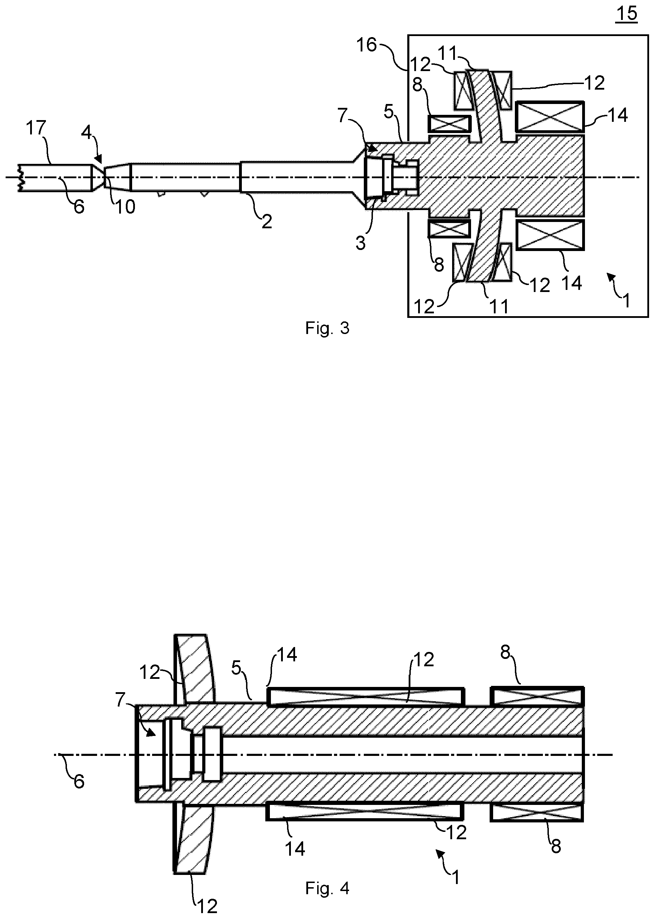

Die erste und zweite Ausführungsform der Werkzeugmaschine 15 gemäß der Figuren 2 und 3 unterscheiden sich von dieser Werkzeugmaschine gemäß Figur 1 durch die Gestaltung der Werkzeugspindel 1 sowie dem aus dessen Bauform resultierenden Formfaktor des Spindelgehäuses 16. Insofern umfasst die in Figur 2 gezeigte Werkzeugspindel 1 das zweite Radiallager 9 in einem - dem Spannfutter 7 abgewandten - Endbereich der zu diesem Zweck entsprechend länger geformten Antriebswelle 5, wohingegen der Elektromotor 14 gegenüber der ersten Ausführungsform nunmehr in einem zwischen dem ersten Radiallager 8 und dem Ring 11 befindlichen mittleren Abschnitt der Antriebswelle 5 angeordnet ist.

Eine wesentliche Abweichung der Ausführungsform gemäß Figur 2 gegenüber jener der Figur 1 hingegen liegt in der Form des Rings 11 selbst, dessen Außendurchmesser in diesem Fall deutlich geringer gewählt ist. So ist der Ring 11 der Werkzeugspindel 1 der Figur 2 deutlich in Richtung eines Fixpunktes 10 in der Zentriersenkung 4 des Bohrwerkzeuges 2 gebogen und von dem ihn beidseitig umschließenden Axiallager 12 lediglich durch einen gegenüber dem Lagerspiel 13 der Figur 1 erheblich dünneren Luftspalt getrennt. Zusätzlich ist das Axiallager 12 auch wesentlich näher am Außenumfang der Antriebswelle 5 selbst angeordnet und so in der Lage, der durch die in die Zentriersenkung 4 eingreifende Pinole 17 in Richtung der Drehachse 6 ausgeübten mechanischen Pinolenkraft, welche sich über das Bohrwerkzeug 2 auf die Antriebswelle 5 und den diese umlaufenden Ring 11 überträgt, eine beträchtliche axiale Lagerkraft entgegenzusetzen. Die Größe des genannten Luftspalts bleibt dabei durch die spezifische Formgebung des Rings 11 auch im Falle einer Schwenkbewegung der Antriebswelle 5 um eine senkrecht zu der Drehachse 6 verlaufenden Schwenkachse im Wesentlichen unverändert. Das Axiallager 12 kann daher in der zweiten Ausführungsform der Werkzeugmaschine 15 gemäß Figur 2 auch als aerostatisches Lager ausgeführt sein, ohne dass der konstante Volumenstrom der etwa mittels geeigneter Verdichter zwischen Ring 11 und Axiallager 12 geförderten Luft beeinträchtigt wäre.

Konkret entsprechen die beiderseits des Rings 11 dem Axiallager 12 zugewandten Oberflächen jenen von Kugelkalotten - eines voneinander geringfügig unterschiedlichen Radius - um den beschriebenen Fixpunkt 10. Eine derartige Raumgeometrie, die sich durch einen im Wesentlichen gleichen Abstand sämtlicher Punkte der jeweiligen Oberfläche zum zentralen Fixpunkt 10 auszeichnet, wird mitunter auch als Kugelkappe oder Kugelhaube beschrieben. Für jede die Drehachse 6 und somit auch den Fixpunkt 10 umfassende Schwenkebene der Antriebswelle 5 stellt diese Formgebung des Rings 11 sicher, dass beide Oberflächen die besagte Raumebene in einem Kreisbogen um den Fixpunkt 10 schneiden.

Eine ähnliche, wenngleich durch eine kürzer ausgeführte Antriebswelle 5 geprägte Gestaltungsvariante wird in Figur 3 anhand einer dritten Ausführungsform der erfindungsgemäßen Werkzeugmaschine 15 verdeutlicht. In diesem Szenario weist der die Antriebswelle 5 der Werkzeugspindel 1 umlaufende Ring 11 wieder einen der Figur 1 vergleichbar größeren Außendurchmesser auf, welcher einem analog vergrößerten Öffnungswinkel der den Ring 11 beschreibenden Kugelkalotten entspricht. Auf das zweite Radiallager 9 der Figur 2 stattdessen wird hier verzichtet, wodurch sich erneut die im Vergleich zu Figur 2 kompaktere Bauform der Figur 1 ergibt.

Die derzeit als am vorteilhaftesten erachtete Ausführungsform einer erfindungsgemäßen Werkzeugspindel 1 schließlich sei nunmehr anhand der Figur 4 erläutert, die zugunsten eines verbesserten Detailgenauigkeit auf die Wiedergabe eines - den Figuren 1 bis 3 entsprechend verspanntes - Bohrwerkzeugs verzichtet. Deutlicher erkennbar wird stattdessen die Formgebung der Antriebswelle 5 in Gestalt einer Hohlwelle eines annähernd gleichmäßigen Außendurchmessers, wobei die Dicke der Wandung näherungsweise einem Drittel dieses Außendurchmessers entspricht. Auch die in Rede stehende Werkzeugspindel 1 umfasst lediglich ein einziges Radiallager 8, welches in diesem Fall eng an einem dem Spannfutter 7 abgewandten axialen Endabschnitt der Antriebswelle 5 anliegt; Letzteres gilt ebenfalls für einen dem Radiallager 8 in Richtung des Spannfutters 7 benachbarten, über einen deutlich längeren Abschnitt verlaufenden Elektromotor 14. Als charakteristisch erweist sich bei dieser Ausführungsform abermals die - nunmehr in einem das Spannfutter 7 umfassenden, "vorderen" Bereich der Antriebswelle 5 angeordnete - Axiallagerung, die hier von einem merklich verstärkten, vom Elektromotor 14 in hinreichendem axialen Abstand angebrachten Axiallager 12 dominiert wird.

## Patentansprüche

1. Werkzeugspindel (1) für ein längliches Bohrwerkzeug (2) mit einem endseitigen Spannschaft (3) zum Verspannen des Bohrwerkzeugs (2) und einer dem Spannschaft (3) in Längsrichtung gegenüber angeordneten Zentriersenkung (4) zum Zentrieren des Bohrwerkzeugs (2), wobei die Werkzeugspindel (1)
- eine Antriebswelle (5) zum Antreiben des Bohrwerkzeugs (2),
- ein in einer längs zu der Antriebswelle (5) gerichteten Drehachse (6) starr mit der Antriebswelle (5) verbundenes Spannfutter (7) zum Aufnehmen des Spannschafts (3) und
- mindestens ein die Antriebswelle (5) radial zumindest bereichsweise umschließendes Radiallager (8, 9) zum radialen Lagern der Antriebswelle (5) umfasst, so konfiguriert, dass das Radiallager (8, 9) die Antriebswelle (5) um die Drehachse (6) drehbar lagert, und
wobei das Radiallager (8, 9) ein aktives Magnetlager und so konfiguriert ist, dass es die Antriebswelle (5) ferner um mindestens eine senkrecht zu der Drehachse (6) durch einen Fixpunkt (10) verlaufende Schwenkachse schwenkbar lagert, wobei der Fixpunkt (10) in der Zentriersenkung (4) liegt, wenn das Bohrwerkzeug (2) in der Werkzeugspindel (1) verspannt ist,
**dadurch gekennzeichnet,**
- **dass** ein die Antriebswelle (5) radial umlaufender, starr mit der Antriebswelle (5) verbundener Ring (11) und ein den Ring (11) zumindest bereichsweise umschließendes Axiallager (12) zum axialen Lagern der Antriebswelle (5) vorgesehen sind, und
- **dass** der Ring (11) in Richtung des Fixpunkts (10) gebogen ist.

2. Werkzeugspindel nach Anspruch 1,
**dadurch gekennzeichnet, dass**
mindestens eine Oberfläche des Rings (11) eine senkrecht zu der Schwenkachse verlaufende, den Fixpunkt (10) umfassende Schwenkebene in einem Kreisbogen um den Fixpunkt (10) schneidet.

3. Werkzeugspindel nach Anspruch 2,
**dadurch gekennzeichnet, dass**
die Oberfläche eine Kugelkalotte um den Fixpunkt (10) ist.

4. Werkzeugspindel nach einem der Ansprüche 1 bis 3,
**dadurch gekennzeichnet, dass**
das Axiallager (12) ein magnetisches, hydrostatisches oder aerostatisches Lager ist.

5. Werkzeugspindel nach einem der Ansprüche 1 bis 4,
**gekennzeichnet durch**
eine elektrisch mit dem Radiallager (8, 9) verbundene Steuerung zum Steuern der Werkzeugspindel (1), so konfiguriert, dass das Radiallager (8, 9) das Bohrwerkzeug (2) über die Antriebswelle (5) in eine Schwingung mit einer Auslenkung von näherungsweise 100 µm versetzen kann, wenn das Bohrwerkzeug (2) in der Werkzeugspindel (1) verspannt und diese in Betrieb ist.

6. Werkzeugspindel nach einem der Ansprüche 1 bis 5,
**gekennzeichnet durch**
einen mechanisch mit der Antriebswelle (5) verbundenen Elektromotor (14) zum Drehen der Werkzeugspindel (1).

7. Werkzeugspindel nach einem der Ansprüche 1 bis 6,
**dadurch gekennzeichnet, dass**
die Antriebswelle (5) mittels eines Sinterprozesses hergestellt mit anschließender spanender Nachbearbeitung hergestellt ist.

8. Werkzeugspindel nach Anspruch 7,
**dadurch gekennzeichnet, dass**
der eingesetzte Sinterwerkstoff härtbar ist und mindestens einen TiCa Anteil von 22 Gew. % aufweist.

9. Werkzeugmaschine (15) mit
- einer Werkzeugspindel (1) nach einem der Ansprüche 1 bis 8 zum Tragen eines Bohrwerkzeugs (2),
- einem die Werkzeugspindel (1) zumindest bereichsweise umschließenden Spindelgehäuse (16) zum Aufnehmen der Werkzeugspindel (1) und
- eine außerhalb des Spindelgehäuses (16) in Richtung der Werkzeugspindel (1) ausgerichtete Pinole (17) zum Abstützen des Bohrwerkzeugs (2) gegen die Werkzeugspindel (1), so geformt, dass die Pinole (17) in eine endseitige Zentriersenkung (4) des Bohrwerkzeugs (2) eingreifen kann.

## Claims

1. Tool spindle (1) for an elongated drilling tool (2) having an end-side clamping shaft (3) for clamping the drilling tool (2) and a centring countersink (4), arranged opposite the clamping shaft (3) in longitudinal direction, for centring the drilling tool (2), wherein the tool spindle (1) comprises
- a drive shaft (5) for driving the drilling tool (2),
- a chuck (7), connected rigidly with the drive shaft (5) in a axis of rotation (6) oriented longitudinally to the drive shaft (5), for receiving the clamping shaft (3) and
- at least one radial bearing (8, 9), at least portionally radially enclosing the drive shaft (5), for the radial support of the drive shaft (5), configured such that the radial bearing (8, 9) supports the drive shaft (5) rotationally about the axis of rotation (6), and
wherein the radial bearing (8, 9) is an active magnetic bearing and configured such that it supports the drive shaft (5) furthermore swivellably about at least one swivel axis extending perpendicularly to the axis of rotation (6) through a fixed point (10), wherein the fixed point (10) is located in the centring countersink (4) when the drilling tool (2) is clamped in the tool spindle (1),
**characterised in**
- **that** a ring (11) surrounding the drive shaft (5) radially and connected rigidly with the drive shaft (5) and an axial bearing (12) surrounding the ring (11) at least portionally are provided for the axial support of the drive shaft (5), and
- **that** the ring (11) is bent in the direction of the fixed point (10).

2. Tool spindle according to claim 1,
**characterised in that**
at least one surface of the ring (11) cuts, in a circular arc about the fixed point (10), a swivel plane extending perpendicularly to the swivel axis and comprising the fixed point (10).

3. Tool spindle according to claim 2,
**characterised in that**
the surface is a spherical dome about the fixed point (10).

4. Tool spindle according to any of claims 1 to 3,
**characterised in that**
the axial bearing (12) is a magnetic, hydrostatic or aerostatic bearing.

5. Tool spindle according to any of claims 1 to 4,
**characterised by**
a controller, connected electrically with the radial bearing (8, 9) for controlling the tool spindle (1), configured such that the radial bearing (8, 9) can offset the drilling tool (2) via the drive shaft (5) into a vibration having a displacement of approximately 100 µm, when the drilling tool (2) is clamped in the tool spindle (1) and said tool spindle is in operation.

6. Tool spindle according to any of claims 1 to 5,
**characterised by**
an electric motor (14) connected mechanically with the drive shaft (5) for rotating the tool spindle (1).

7. Tool spindle according to any of claims 1 to 6,
**characterised in that**
the drive shaft (5) manufactured by means of a sintering process is manufactured with subsequent machining post-processing.

8. Tool spindle according to claim 7,
**characterised in that**
the sinter material used can be cured and has at least a TiCa proportion of 22 wt.%.

9. Tool machine (15) having
- a tool spindle (1) according to any of claims 1 to 8 for supporting a drilling tool (2),
- a spindle housing (16) for receiving the tool spindle (1) enclosing at least portionally the tool spindle (1) and
- a spindle sleeve (17) for supporting the drilling tool (2) against the tool spindle (1), aligned externally to the spindle housing (16) in the direction of the tool spindle (1), formed such that the spindle sleeve (17) can engage in an end-side centring countersink (4) of the drilling tool (2).

## Revendications

1. Broche d'outil (1) pour un outil de forage oblong (2) avec un arbre de serrage (3) côté extrémité pour le serrage de l'outil de forage (2) et un évidement de centrage (4) agencé par rapport à l'arbre de serrage (3) dans le sens longitudinal pour le centrage de l'outil de forage (2), dans laquelle la broche d'outil (1) comporte
- un arbre d'entraînement (5) pour l'entraînement de l'outil de forage (2),
- un mandrin de serrage (7) raccordé dans un axe de rotation (6) dirigé le long de l'arbre d'entraînement (5) rigidement à l'arbre d'entraînement (5) pour la réception de l'arbre de serrage (3) et
- au moins un palier radial (8, 9) entourant radialement au moins par endroits l'arbre d'entraînement (5) pour le logement radial de l'arbre d'entraînement (5), configuré de sorte que le palier radial (8, 9) loge de manière à pouvoir tourner l'arbre d'entraînement (5) autour de l'axe de rotation (6), et
dans laquelle le palier radial (8, 9) est un palier magnétique actif et est configuré de sorte qu'il loge de manière pivotante l'arbre d'entraînement (5) de plus autour d'au moins un axe de pivotement s'étendant perpendiculairement à l'axe de rotation (6) par un point fixe (10), dans laquelle le point fixe (10) se trouve dans l'évidement de centrage (4) lorsque l'outil de forage (2) est serré dans la broche d'outil (1),
**caractérisée en ce que**
- qu'un anneau (11) raccordé rigidement à l'arbre d'entraînement (5), tournant radialement l'arbre d'entraînement (5) et un palier axial (12) entourant l'anneau (11) au moins par endroits pour le logement axial de l'arbre d'entraînement (5) sont prévus, et
- que l'anneau (11) est plié en direction du point fixe (10).

2. Broche d'outil selon la revendication 1,
**caractérisée en ce que**
au moins une surface de l'anneau (11) coupe un plan pivotant comprenant le point fixe (10), s'étendant perpendiculairement à l'axe de pivotement dans un arc de cercle autour du point fixe (10).

3. Broche d'outil selon la revendication 2,
**caractérisée en ce que**
la surface est une calotte sphérique autour du point fixe (10).

4. Broche d'outil selon l'une quelconque des revendications 1 à 3,
**caractérisée en ce que**
le palier axial (12) est un palier magnétique, hydrostatique ou aérostatique.

5. Broche d'outil selon l'une quelconque des revendications 1 à 4,
**caractérisée par**
une commande raccordée électriquement au palier radial (8, 9) pour la commande de la broche d'outil (1), configurée de sorte que le palier radial (8, 9) puisse amener l'outil de forage (2) par le biais de l'arbre d'entraînement (5) dans une oscillation avec une déviation d'approximativement 100 µm lorsque l'outil de forage (2) est serré dans la broche d'outil (1) et celle-ci est en fonctionnement.

6. Broche d'outil selon l'une quelconque des revendications 1 à 5,
**caractérisée par**
un moteur électrique (14) raccordé mécaniquement à l'arbre d'entraînement (5) pour la rotation de la broche d'outil (1).

7. Broche d'outil selon l'une quelconque des revendications 1 à 6,
**caractérisée en ce que**
l'arbre d'entraînement (5) est fabriqué au moyen d'un processus de frittage établi avec usinage ultérieur par enlèvement de copeaux consécutif.

8. Broche d'outil selon la revendication 7,
**caractérisée en ce que**
le matériau de frittage inséré peut être durci et présente au moins une part de TiCa de 22 % en poids.

9. Machine-outil (15) avec
- une broche d'outil (1) selon l'une quelconque des revendications 1 à 8 pour porter un outil de forage (2),
- un boîtier de broche (16) entourant au moins par endroits la broche d'outil (1) pour la réception de la broche d'outil (1) et
- un fourreau (17) orienté en dehors du boîtier de broche (16) en direction de la broche d'outil (1) pour l'appui de l'outil de forage (2) contre la broche d'outil (1), formé de sorte que le fourreau (17) puisse venir en prise dans un évidement de centrage (4) côté extrémité de l'outil de forage (2).
